(19) Europäisches Patentamt
European Patent Office
Office européen des brevets

(11) EP 0 876 360 B1

(12) **EUROPEAN PATENT SPECIFICATION**

(45) Date of publication and mention of the grant of the patent:
**19.09.2001 Bulletin 2001/38**

(21) Application number: **96944683.0**

(22) Date of filing: **18.12.1996**

(51) Int Cl.[7]: **C07D 301/19**
// B01J31/12, C07F7/28

(86) International application number:
**PCT/EP96/05873**

(87) International publication number:
**WO 97/24344 (10.07.1997 Gazette 1997/30)**

(54) **PREPARATION OF OXIRANE COMPOUNDS WITH TITANASILSESQUIOXANE CATALYSTS**

HERSTELLUNG VON OXIRANDERIVATEN MIT HILFE VON TITANSILSESQUIOXANKATALYSATOREN

PREPARATION DE COMPOSES EPOXYDE EN UTILISANT UN TITANASILSESQUIOXANE COMME CATALYSEUR

(84) Designated Contracting States:
**BE DE FR GB IT NL**

(30) Priority: **27.12.1995 EP 95203654**

(43) Date of publication of application:
**11.11.1998 Bulletin 1998/46**

(73) Proprietor: **SHELL INTERNATIONALE RESEARCH MAATSCHAPPIJ B.V.**
**2596 HR Den Haag (NL)**

(72) Inventors:
- **CROCKER, Mark**
  **NL-1031 CM Amsterdam (NL)**
- **HEROLD, Rudolf, Henri, Max**
  **NL-1031 CM Amsterdam (NL)**

(74) Representative:
**Zeestraten, Albertus Wilhelmus Joannes et al**
**Shell International B.V.,**
**Intellectual Property Services,**
**P.O. Box 384**
**2501 CJ The Hague (NL)**

(56) References cited:
**EP-A- 0 345 856** **EP-A- 0 368 656**
**US-A- 3 873 578**

- **ANGEWANDTE CHEMIE, INTERNATIONAL EDITION, vol. 33, no. 13, 18 July 1994, WEINHEIM, DE, pages 1352-4, XP002028743 N. WINKHOFER ET AL.: "Stable silanetriols as building blocks for the synthesis of titanasilasesquioxanes-Model compounds for titanium-doped zeolites" cited in the application**
- **JOURNAL OF THE AMERICAN CHEMICAL SOCIETY, vol. 114, no. 10, 6 May 1992, WASHINGTON DC, US, pages 3859-66, XP002028744 F.J. FEHER ET AL.: "Reaction of incompletely-condensed silsesquioxanes with pentamethylantimony: a new synthesis of metallasilsesquioxanes with important implications for the chemistry of silica surfaces"**
- **JOURNAL OF MOLECULAR CATALYSIS, vol. 86, 1994, AMSTERDAM, NL, pages 309-18, XP000647078 I.E. BUYS ET AL.: "Models for surface-confined metallocene derivatives" cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 876 360 B1

## Description

The present invention relates to a process wherein an olefinically unsaturated hydrocarbon ("olefin") is reacted with an organic hydroperoxide to produce an epoxide (oxirane compound) and an alcohol, in the presence of a catalyst comprising titanium and silicon. This well-known type of reaction is of special commercial importance for the epoxidation of substituted or unsubstituted alkenes such as propene (to propene oxide), allyl chloride (to epichlorohydrine) and octene (to octene oxide) - whereby the organic hydroperoxide used may be aliphatic such as tertiary butyl hydroperoxide, or aromatic such as ethylbenzene hydroperoxide.

A variety of homogeneous and heterogeneous catalysts has been employed for the reaction of olefins with organic hydroperoxides.

US-A-3,350,422 and US-A-3,351,635 disclose the use of solutions of transition metal compounds (V, Mo, W, Ti, Nb, Ta, Re, Se, Zr, Te and U), as homogeneous catalysts. S. Coleman-Kamula and E. Duim-Koolstra in J. organomet. Chem. 246 **1983** 53-56 disclose the use of a solution of molybdenyl acetylacetate as a homogeneous catalyst.

US-A-4,367,342 discloses the use of inorganic oxygen compounds of silicon in chemical composition with at least 0.1 wt% of an oxide or hydroxide of titanium, as heterogeneous catalysts. And EP-B-0 345 856 discloses a titanium/silica heterogeneous catalyst which is obtainable by impregnating the silicon compound with a stream of gaseous titanium tetrachloride, followed by calcination and hydrolysis steps.

The above catalysts are effective in the epoxidation of the lower alkenes such as propene, but there still exists a need for more effective (active as well as selective) general purpose olefin epoxidation catalysts.

Incompletely condensed silsesquioxanes of the general formula $R_7Si_7O_9(OH)_3$ have been proposed as models for silica surfaces. F. J. Feher et al in J. Am. Chem. Soc. 111 **1989** 1741-1748 describe the hydrolytic condensation of cyclohexyltrichlorosilane to the incompletely condensed silsesquioxane compound $(c\text{-}C_6H_{11})_7Si_7O_9(OH)_3$, the structure of which has great similarity with the crystalline forms of silica, beta-cristobalite and tridymite. In organometallics 10 **1991** 2526-2528 Feher et al. disclose that the similar condensation reactions of cyclopentyl ($c\text{-}C_5H_9$) and of cycloheptyl ($c\text{-}C_7H_{13}$) trichlorosilane are much quicker than that of cyclohexyltrichlorosilane, which latter reaction is inconveniently slow.

It is also known that the three neighbouring OH groups in the above silsesquioxane compounds can be further reacted with a transition metal compound to form the corresponding metallasilsesquioxane. I. E. Buys et al. in J. Mol. Catalysis 86 **1994** 309-318 disclose the reaction of titanium, zirconium or hafnium compounds, such as cyclopentadienyl titanium trichloride $CpTiCl_3$ which reacts with the silsesquioxane $(c\text{-}C_6H_{11})_7Si_7O_9(OH)_3$ to form the corresponding metallasilsesquioxane $(c\text{-}C_6H_{11})_7Si_7O_{12}TiCp$ and HCl. Finally, N. Wikorfer et al. in Angew. Chem. Int. Ed. Engl. 33 **1994** 1352-1353 suggest but do not show that similar titanasilsesquioxanes, containing more than one titanium atom per molecule, may be effective as catalysts.

It has now been found that certain titanasilsesquioxanes are particularly effective in the production of oxirane compounds from olefinically unsaturated hydrocarbons and organic hydroperoxides.

The present invention concerns a process for the preparation of an oxirane compound by reacting an olefinically unsaturated hydrocarbon with an organic hydroperoxide, in the presence of a catalyst comprising a titanasilsesquioxane of the general formula $TiLR_7Si_7O_{12}$ and the structural formula

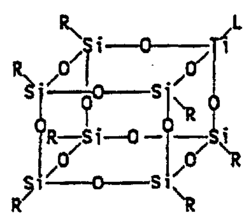

wherein R is chosen from the group of cyclopentyl, cyclohexyl and cycloheptyl and L is chosen from the group of alkyl, cycloalkyl, arylalkyl, alkoxy, aryloxy, siloxy, amido and OH.

Preferably, L is chosen from the group of phenoxy, isopropoxy, benzyl, trimethylsiloxy and dimethyl amido.

The incompletely condensed silsesquioxanes $R_7Si_7O_9(OH)_3$ are generally prepared by addition of excess water to a vigorously stirred solution of the appropriate trichlorosilane, $RSiCl_3$, in an organic solvent. The solvent employed is preferably one which is miscible with water and in which the product silsesquioxane is insoluble or only slightly soluble. Suitable solvents include acetone, acetonitrile, dimethylformamide and dimethylsulfoxide. The concentration of the trichlorosilane is typically in the range of 0.01-1.0 M, and most preferably in the range of 0.1-0.6 M. The volume of water added to the dissolved trichlorosilane is such that the final concentration of water in the reaction mixture is between 1 and 60 vol%, and preferably between 5 and 40 vol%. The reaction mixture can be left to stand at room

temperature and atmospheric pressure, in which case the crude silsesquioxane product precipitates out of solution during the following weeks. In the case of the cyclopentyl- and cycloheptyl- substituted trichlorosilanes, refluxing the reaction mixture accelerates the formation of the silsesquioxane product (as described in the 1991 Feher et al. publication), such that product yields of up to 60% can be obtained after a few days.

Isolation of the silsesquioxane product is achieved by filtering off the solid from the reaction mixture. Before being used for the preparation of titanasilsesquioxanes, the incompletely condensed silsesquioxanes are preferably purified, using methods standard to preparative organic chemistry. Typically the incompletely condensed silsesquioxane is extracted into a basic solvent such as pyridine or triethylamine and separated from insoluble material by filtration. The weight of solvent used is generally between 5 and 40 times that of the crude silsesquioxane. The solvent is then removed, either under reduced pressure, or by reaction with a slight excess of aqueous mineral acid. In the latter case, the resulting pyridinium or organoammonium salt is removed by washing with water. If the pyridine or amine solvent is removed under reduced pressure, then the last traces of solvent are preferably removed from the solid by briefly washing the silsesquioxane with dilute aqueous mineral acid (preferably not stronger than 1 M), followed by water. After drying, the solid is briefly washed with pentane (using between 0.5 and 5 ml pentane/g product), to afford a product of generally acceptable purity (typically >95%). Material of >99% purity can be obtained by recrystallising the product from a solvent in which it is quite soluble, such as hot diethyl ether.

The titanasilsesquioxanes $TiLR_7Si_7O_{12}$ according to the invention are typically prepared by stirring a homoleptic titanium complex, $TiM_4$ (M being at least one group L and at most three halogen atoms - see the Buys et al. publication), with a stoichiometric amount of the appropriate incompletely condensed silsesquioxane $R_7Si_7O_9(OH)_3$ in an aprotic organic solvent in which the reactants are sufficiently soluble. Suitable solvents include pentane, toluene, diethyl ether, THF and dichloromethane. The reaction is typically performed under an inert gas (e.g., nitrogen or argon) at room temperature and at about atmospheric pressure, and is generally complete within a few minutes. The concentration of the reactants is not of prime importance, but convenient concentrations are in the region of 0.01-0.1 M for each reactant when R is cyclohexyl, and 0.001-0.005 M for each reactant when R is cyclopentyl or cycloheptyl.

Isolation of the titanasilsesquioxane product is most conveniently accomplished by removing the volatile material present (i.e. solvent and reaction co-product MH) under reduced pressure. Analytically pure material is obtained by precipitating the titanasilsesquioxane from solution by adding a polar, aprotic solvent in which the complex is insoluble (e.g., acetonitrile). If the complex is to be used directly as a catalyst, then it is most conveniently generated in situ and used without further purification.

Once prepared, a titanasilsesquioxane can be modified by exchanging its ligand L for another appropriate ligand $L^1$. This is done by adding a stoichiometric amount of a protic species $L^1H$, having a pKa lower than that of LH, to the titanasilsesquioxane. Non-limiting examples of $L^1H$ are alcohols, arylalcohols, silanols, and water. The reaction is as follows:

$$[Ti(L)(R_7Si_7O_{12})] + L^1H \dashrightarrow [Ti\ (L^1)\ (R_7Si_7O_{12})] + LH$$

The reaction conditions are similar to those for preparing the titanasilsesquioxanes. If desired the new ($L^1$) titanasilsesquioxane can be isolated using the procedure described above, but it is also convenient to prepare the $L^1$ titanasilsesquioxane in situ and use it as a catalyst without purification.

The titanasilsesquioxanes according to the invention are generally soluble in apolar organic solvents such as pentane, diethyl ether and toluene, and insoluble in polar organic solvents such as acetonitril, dimethyl formamide, dimethyl sulfoxide and methanol. The reagents, olefins as well as organic hydroperoxides, are soluble in both polar and apolar organic solvents. Therefore, the process according to the invention can be performed in a homogeneous system when the catalyst as well as the reagents are dissolved in an apolar organic solvent, or in a heterogeneous system whereby only the reagents are dissolved in a polar organic solvent. In the latter case the titanasilsesquioxane catalyst may be used as such in a slurry, but preferably it is impregnated on an inert inorganic carrier material, having a specific surface area of at least 10 $m^2$ per gram and a pore volume of at least 0.1 ml per gram. The inert carrier should preferably not contain free acid or basic groups. Silylated silica, silicon carbide and activated coal are preferred inert carriers.

The titanasilsesquioxanes are preferably immobilised on an appropriate support using the pore volume impregnation (PVI) technique. A concentrated solution of the titanasilsesquioxane is added to the carrier, the volume of liquid employed being approximately equal to the total pore volume of the support. Suitable solvents are those in which the titanium complex is very soluble, such as aromatic hydrocarbons, alkanes and ethers. After impregnation the solid is agitated so as to ensure efficient spreading of the liquid on the carrier, after which the solvent is removed (either by heating or by drying under reduced pressure). The loading of titanium complex can be controlled as desired by altering the concentration of the solution used for the impregnation. Desirable titanasilsesquioxane loadings are typically in the range of 5-60 wt%, and preferably in the range of 10-25 wt%, depending on the surface area of the support.

The olefinically unsaturated hydrocarbon reactant may in principle be any organic compound having at least one olefinic double bond. The compound may be acyclic, monocyclic, bicyclic or polycyclic and it may be mono-olefinic, diolefinic or polyolefinic. If there are more than one olefinic linkages, these may either be conjugated or non-conjugated. Generally preferred are olefinic compounds having from 2 to 60 carbon atoms. Although substituents, which should preferably be relatively stable, may be present, acyclic monoolefinic hydrocarbons having from 2 to 10 carbon atoms are of particular interest. Such hydrocarbons include, e.g., ethylene, propylene, isobutylene, hexene-3, octene-1 and decene-1. Butadiene may be mentioned as an example of a suitable diolefinic hydrocarbon. Substituents, if present, may, e.g., be halogen atoms or comprise atoms of oxygen, sulphur and nitrogen together with atoms of hydrogen and/or carbon. Of particular interest are olefinically unsaturated alcohols, and halogen-substituted olefinically unsaturated hydrocarbons, including, e.g., allyl alcohol, crotyl alcohol and allyl chloride. Particularly preferred are alkenes having from 3 to 40 carbon atoms, which may or may not be substituted with a hydroxy or a halogen atom.

The organic hydroperoxide reactant may generally be any organic compound represented by the general formula R-O-O-H, in which R is a monovalent hydrocarbyl group, which will react with the olefinic compound to form an oxirane compound and a compound R-OH. Preferably, the group R has from 3 to 20 carbon atoms. Most preferably, it is a hydrocarbyl group, in particular a secondary or tertiary alkyl or aralkyl group, having from 3 to 10 carbon atoms. Especially preferred among these groups are the tertiary alkyl and secondary or tertiary aralkyl groups, including, e.g., tertiary butyl, tertiary pentyl, cyclopentyl, 1-phenylethyl-1, 2-phenylpropyl-2 and the various tetralinyl radicals which originate by elimination of a hydrogen atom from the aliphatic side-chain of the tetralin molecule.

Aralkyl hydroperoxide, wherein the hydroperoxy group is linked to that carbon atom of an alkyl side-chain which is attached directly to an aromatic ring, including 1-phenylethyl-1-hydroperoxide and 2-phenylpropyl-2-hydroperoxide, are often called after the corresponding hydrocarbons, e.g. ethyl benzene hydroperoxide and cumene hydroperoxide. Preferred organic hydroperoxides are ethylbenzene hydroperoxide (EBHP), cumene hydroperoxide and tertiary butyl hydroperoxide (TBHP).

The process according to the invention can be operated in batch, or in continuous operation.

The epoxidation reaction of the invention is generally conducted in the liquid phase using solvents and/or diluents which are liquid at the reaction temperature and pressure, and substantially inert to the reactants, the catalyst and the products. The presence of reactive materials such as water is desirably avoided. A substantial part of the solvent/diluent may consist of materials present in the organic hydroperoxide solution employed. An excess of the amount of olefinic reactant may also serve as a solvent together with the solvent introduced with the organic peroxide. The total amount of solvent may be up to 20 moles per mole of hydroperoxide.

The amount of titanasilsesquioxane used in a homogeneous reaction system will generally be in the range from 1 to $10^{-6}$, preferably from $10^{-3}$ to $10^{-5}$, mol of titanium (calculated as the oxide) per mol of the organic hydroperoxide to be reacted.

In a homogeneous reaction system the titanasilsesquioxane catalyst can be introduced into the reactor either as a solid, or more conveniently as a solution in an appropriate (preferably non-coordinating or weakly coordinating) apolar solvent such as an alkane, alkene (e.g. the reactant itself), toluene and dichloromethane.

If the titanasilsesquioxane catalyst is immobilised on a carrier, the solvent employed in the reaction must be one in which the titanasilsesquioxane is not soluble, such as acetonitrile, dimethylformamide and dimethylsulfoxide. The heterogeneous catalyst may be operated in a fixed-bed mode. If operated in a batch mode, it may be isolated by filtration at completion of the epoxidation reaction.

The epoxidation reaction generally is performed at moderate temperatures and pressures. The temperature typically is in the range from 0 to 200 °C, the range from 25 to 200 °C being preferred. The precise pressure is not critical as long as it suffices to maintain the reaction mixture in liquid condition. Atmospheric pressure may be satisfactory. In general, pressures are suitable in the range from 100 to 10000 kPa.

At the conclusion of the reaction, the product mixture is separated and the products are recovered by conventional methods such as fractional distillation, selective extraction and filtration. The solvent, the catalyst and any unreacted olefin or hydroperoxide can be recycled.

In the process of the invention, the olefin reactant is converted to olefin oxide (oxirane compound). These products are materials of established utility and many of them are chemicals of commerce. For example, propylene oxide is formulated into useful polymers and copolymers.

The organic hydroperoxide reactant is converted to the corresponding alcohol, which can be recovered as a by-product of the process or reconverted to the hydroperoxide.

The following examples will illustrate the invention.

Example 1

Preparation of incompletely condensed silsesquioxanes,

**1.1 = $(c\text{-}C_6H_{11})_7Si_7O_9(OH)_3$**

Distilled water (3.6 l) was added to a vigorously stirred solution of cyclohexyltrichlorosilane $(c\text{-}C_6H_{11})SiCl_3$ (750 g, 3.5 mol) in acetone (14 l), after which stirring was stopped and the mixture left to stand in a stoppered flask at ambient temperature and atmospheric pressure for 6 months. After this time the solid present was isolated by filtration, the resulting filter-cake being broken up with a spatula and briefly stirred with pentane (200 ml). The slurry was filtered and the resulting solid washed with pentane until the solid was white in colour. Drying overnight in a vacuum oven (60 °C) afforded 82 g of crude product. Extraction of the product with pyridine, followed by neutralisation with aqueous HCl, filtration and crystallisation from ether (as described in the 1989 Fehler et al. publication) afforded 33 g of the pure incompletely condensed silsesquioxane.

The pentane filtrate and washings from above were combined and volatile material removed on a rotary evaporator. The brown residue was dissolved in a minimum of acetone and added to the aqueous acetone which had earlier been filtered. The flask was re-stoppered and left to stand for a further year before the sequence of silsesquioxane isolation was repeated. After a period of 3 years the total yield of $(c\text{-}C_6H_{11})_7Si_7O_9(OH)_3$ was 180 g.

**1.2 = $(c\text{-}C_5H_9)_7Si_7O_9(OH)_3$**

Distilled water (350 ml) was added to a vigorously stirred solution of $(c\text{-}C_5H_9)SiCl_3$ (63 g, 0.31 mol) in acetone (1.2 l), after which the mixture was refluxed for 72 h. The solid present was isolated by filtration and the resulting filter-cake was broken up with a spatula and briefly stirred with pentane (150 ml). The slurry was filtered and the resulting solid washed with pentane until the solid was white in colour. Drying overnight in a vacuum oven (60 °C) afforded 24 g of crude product. Extraction of the product with pyridine, followed by neutralisation with aqueous HCl, filtration and extraction into diethyl ether according to the method described in the 1991 Feher et al. publication afforded the pure silsesquioxane in 44% yield.

Example 2

Preparation of titanasilsesquioxanes

All manipulations were performed under atmospheric pressure, under argon or nitrogen. Solvents were dried before use.

**2.1 = $Ti(CH_2Ph)\{(c\text{-}C_6H_{11})_7Si_7O_{12}\}$**

Diethyl ether (20 ml) was added to a solid mixture of $Ti(CH_2Ph)_4$ (0.500 g, 1.21 mmol) and the silsesquioxane $(c\text{-}C_6H_{11})_7Si_7O_9(OH)_3$ (1.179 g, 1.21 mmol). The mixture was stirred at room temperature for 30 min. and the resulting solution filtered. Acetonitrile was then added dropwise to the filtrate to afford a precipitate of $Ti(CH_2Ph)\{(c\text{-}C_6H_{11})_7Si_7O_{12}\}$. The yellow solid was isolated by filtration, washed with acetonitrile (3 x 5 ml) and dried under vacuum (1.194 g, 89%).

The product was characterised on the basis of the following data:
1H NMR ($C_6D_6$, 250.1 MHz): δ 7.31-7.03 (m, 5 H, $C_6H_5$), 3.10 (s, 2 H, $CH_2Ph$), 2.20-0.97 (m, 77 H, $c\text{-}C_6H_{11}$). $^{13}C$ NMR ($C_6D_6$, 100.6 MHz): δ 142.98 (s, ipso-Ph), 124.33 (s, Ph, other signals obscured by solvent), 81.17 (s, $CH_2Ph$), 27.77, 27.70, 27.60, 27.32, 27.30, 27.27, 27.21 (s, $CH_2$), 23.75, 23.72, 23.51 (s, 3:1:3 for CH). $^{29}Si$ NMR ($C_6D_6$, 79.5 MHz) : δ -65.55, -67.67, -68.73 (s, 3:1:3). Anal. Calcd for $C_{49}H_{84}O_{12}Si_7Ti$ (found): C, 53.11 (52.79); H, 7.64 (7.68).

**2.2 = $Ti(O^iPr)\{(c\text{-}C_6H_{11})_7Si_7O_{12}\}$**

Addition of $Ti(O^iPr)_4$ (0.62 g, 2.18 mmol) to a slurry of $(c\text{-}C_6H_{11})_7Si_7O_9(OH)_3$ (2.050 g, 2.11 mmol) in diethyl ether (50 ml), followed by work-up as above, afforded $Ti(O^iPr)\{(c\text{-}C_6H_{11})_7Si_7O_{12}\}$ as a white solid (2.240 g, 99%).

The product was characterised on the basis of the following data:
$^1H$ NMR ($C_6D_6$, 250.1 MHz): δ 4.41 (septet, 1 H, $CH(CH_3)_2$, J = 6.1 Hz), 2.15 - 1.00 (m, 77 H, $c\text{-}C_6H_{11}$), 1.20 (d, 6 H, $CH(CH_3)_2$, J = 6.1 Hz). $^{13}C$ NMR ($C_6D_6$, 100.6 MHz):
δ 80.09 (s, $CH(CH_3)_2$), 27.83, 27.81, 27.48, 27.44, 27.33, 27.28, 27.22 (s, $CH_2$), 25.80 (s, $CH_3$), 23.91, 23.85, 23.78 (s, 3:1:3 for CH). $^{29}Si$ NMR ($C_6D_6$, 79.5 MHz):

δ -64.75, -66.68, -67.67 (s, 3:1:3). Anal. Calcd for $C_{45}H_{84}O_{13}Si_7Ti$ (found): C, 50.16 (49.93); H, 7.86 (7.70).

**2.3 = $Ti(CH_2Ph)\{(c\text{-}C_5H_9)_7Si_7O_{12}\}$**

A solution of $[Ti(CH_2Ph)_4]$ (0.919 g, 2.23 mmol) in diethyl ether (20 ml) was added dropwise to a vigorously stirred suspension of the silsesquioxane $(c\text{-}C_5H_9)_7Si_7O_9(OH)_3$ (1.950 g, 2.23 mmol) in ether (100 ml). The resulting deep yellow solution was stirred for 2 h. The volume of solvent was then reduced under vacuum (to ca. 15 ml) and acetonitrile (15 ml) added to afford $Ti(CH_2Ph)\{(c\text{-}C_5H_9)_7Si_7O_{12}\}$ as a yellow precipitate. The solid was isolated by filtration, washed with acetonitrile (3 x 10 ml) and dried under vacuum (1.85 g, 82%).

The product was characterised on the basis of the following data:

$^1H$ NMR ($C_6D_6$, 500.1 MHz): δ 7.18-7.15 (m, 4 H, o-,m,-$C_6H_5$), 6.87 (t, 1 H, p-$C_6H_5$, J = Hz), 3.02 (s, 2 H, $CH_2Ph$), 1.99 - 1.13 (m, 63 H, c-$C_5H_9$). $^{13}C$ NMR ($C_6D_6$, 125.8 MHz): δ 142.90 (s, ipso-Ph), 124.34 (s, Ph, other signals obscured by solvent), 81.53 ($CH_2Ph$), 27.92, 27.90, 27.87, 27.78, 27.46 (s, $CH_2$), 22.73, 22.65, 22.40 (s, 3:1:3 for CH). $^{29}Si$ NMR ($C_6D_6$, 99.4 MHz): δ -62.72, -64.74, -65.88 (s, 3:1:3). Anal. Calcd for $C_{42}H_{70}O_{12}Si_7Ti$ (found): C, 49.87 (-); H, 6.98 (6.80).

**2.4 = $Ti(O^iPr)\{(c\text{-}C_5H_9)_7Si_7O_{12}\}$**

$[Ti(O^iPr)_4]$ (0.48 g, 1.69 mmol) was added via syringe to a vigorously stirred suspension of $(c\text{-}C_5H_9)_7Si_7O_9(OH)_3$ (1.350 g, 1.54 mmol) in diethyl ether (120 ml). The mixture was stirred at room temperature for 4 h, after which time work-up (as described above) afforded Ti(OiPr){(c-$C_5H_9$)7$Si_7O_{12}$} as a white solid (1.291 g, 85%).

The product was characterised on the basis of the following data:

$^1H$ NMR ($C_6D_6$, 500.1 MHz): δ 4.40 (septet, 1 H, $CH(CH_3)_2$, J = 6.0 Hz), 1.94-1.11 (m, 63 H, c-$C_5H_9$), 1.18 (d, 6 H, $CH(CH_3)_2$, J = 6.0 Hz). $^{13}C$ NMR ($C_6D_6$, 100.6 MHz): δ 80.09 (s, $CH(CH_3)_2$), 28.05, 27.97, 27.87, 27.51, 27.44 (s, $CH_2$), 25.67 (s, $CH_3$), 22.84, 22.77, 22.64 (s, 3:1:3 for CH). $^{29}Si$ NMR ($C_6D_6$, 79.5 MHz): δ -63.81, -65.80, -66.83 (s, 3:1:3). Anal. Calcd for $C_{38}H_{70}O_{13}Si_7Ti$ (found): C, 46.60 (45.79); H, 7.20 (6.96).

**2.5 = $Ti(p\text{-}OC_6H_4NO_2)\{(c\text{-}C_5H_9)_7Si_7O_{12}\}$**

A solution of p-$HOC_6H_4NO_2$ (0.097 g, 0.70 mmol) in diethyl ether (20 ml) was added dropwise via syringe to a vigorously stirred slurry of $Ti(CH_2Ph)\{(c\text{-}C_5H_9)_7Si_7O_{12}\}$ (0.702 g, 0.69 mmol) in diethyl ether (40 ml) cooled to -30 °C. After stirring at this temperature for 1 h the mixture was allowed to warm slowly to room temperature and stirred for a further 2 h, after which time work-up (as described above) afforded $Ti(p\text{-}OC_6H_4NO_2)\{(c\text{-}C_5H_9)_7Si_7O_{12}\}$ as a yellow solid (0.257 g, 35%).

**2.6 = $Ti(p\text{-}OC_6H_4NO_2)\{(c\text{-}C_6H_{11})_7Si_7O_{12}\}$**

Reaction of p-$HOC_6H_4NO_2$ with $Ti(CH_2Ph)\{(c\text{-}C_6H_{11})_7Si_7O_{12}\}$ using the procedure described for 2.5, afforded $Ti(p\text{-}OC_6H_4NO_2)\{(c\text{-}C_6H_{11})_7Si_7O_{12}\}$ as a yellow solid in 48% yield.

The product was characterised on the basis of the following data:

$^1H$ NMR($C_6D_6$, 500.1 Mhz) : δ 8.47 (m, 2H, $C_6H_4$), 7.53(m, 2H, $C_6H_4$), 2.11-0.95(m, 77H, c-$C_6H_{11}$). $^{29}Si$ NMR ($C_6D_6$, 79.5 Mhz): δ -66.39, -67.48, -68.18 (s, 3:1:3). Mass spectrum (70 eV): 1155.6 (100%, $M^+$), 578.0 (9%. $M^{2+}$). Anal. Calcd. for $C_{48}H_{81}O_{15}Si_7NTi$ (found): C, 49.84 (48.58); H, 7.06 (7.29); N, 1.21(1.01).

**2.7 = $Ti(OSiMe_3)\{(c\text{-}C_6H_{11})_7Si_7O_{12}\}$**

Addition of $[Ti(OSiMe_3)_4]$ (1.08 g, 2.67 mmol) to a slurry of $(c\text{-}C_6H_{11})_7Si_7O_9(OH)_3$ (2.595 g, 2.67 mmol) in diethyl ether (50 ml), followed by work-up as above, afforded a white microcrystalline solid (2.817 g, 95%).

The product was characterised on the basis of the following data:

$^1H$ NMR ($C_6D_6$, 250.1 MHz): δ 2.13-0.97 (m, 77 H, c-$C_6H_{11}$), 0.21 (s, 9 H, $SiMe_3$). $^{13}C$ NMR ($C_6D_6$, 100.6 MHz): δ 27.80, 27.76, 27.42, 27.40, 27.32, 27.25, 27.18 (s, $CH_2$), 23.88, 23.85, 23.61 (s, 3:1:3 for CH), 1.59 (s, $SiMe_3$). $^{29}Si$ NMR ($C_6D_6$, 79.5 MHz): δ -65.80,
-67.90, -68.85 (s, 3:1:3). Anal. Calcd for $C_{45}H_{86}O_{13}Si_8Ti$ (found): C, 48.79 (48.56); H, 7.82 (7.69).

**2.8 = $Ti(O^iPr)\{(c\text{-}C_6H_{11})_7Si_7O_{12}\}$, 10 wt% immobilised on silylated silica**

Silylated silicagel was prepared by passing hexamethyldisilazane, $Me_3Si)_2SiNH$, over a bed of silicagel heated to 180 °C for two hours, using dry nitrogen as the carrier gas. Excess hexamethyldisilazane was stripped with nitrogen. After cooling to room temperature, 10.0 g of the silylated material was transferred to a flask, to which a solution of 2.2

(1.01 g, 0.94 mmol) in toluene (8.0 ml) was added dropwise via syringe, with vigorous shaking of the flask. The volume of toluene employed was chosen so as to approximately equal the total pore volume (0.8 ml/g) of the silylated silica. After addition of the solution was complete, the flask was sealed and placed on a roller-bank for a period of 1 h. Finally, the solid was dried under vacuum (1 Pa).

Example 3

Preparation of oxiranes

Catalysts 2.1-2.8 according to the invention were compared with Comparative Catalysts A and B. Comparative Catalyst A is a commercial heterogeneous (titania on silylated silica) catalyst according to EP-B-345856. Comparative Catalyst B, molybdenyl acetylacetate $MoO_2(acac)_2$ purchased from Aldrich Co, is a known homogeneous epoxidation catalyst, as disclosed in the Coleman-Kammula and Duim-Koolstra publication.

In these experiments 3.1 and 3.2, the activity of the tested catalysts was expressed in a comparative manner by their second order reaction rate constant $k_2$, based on the hydroperoxide (TBHP) conversion per unit of time.

When the olefin reactant is used at stoichiometric excess (such as in these experiments) the reaction kinetics follow a pseudo-first order pattern corresponding to the rate equation: rate = d[epoxide]/dt = $k_1$ [hydroperoxide], wherein $k_1 = k_2$[Ti], [Ti} being the concentration of the titanasilsesquioxane catalysts in moles per litre.

Standard rate plots of -ln[hydroperoxide] versus 1/t then afford straight lines with slope $k_1$, from which the second order rate constant $k_2$, expressed in $M^{-1}s^{-1}$, can be calculated: $k_2 = k_1$/[Ti].

The per cent selectivity to the desired epoxide product (mol 1,2-epoxyoctane and propylene oxide, respectively, formed per mol TBHP consumed) was also determined in experiments 3.1 and 3.2.

**3.1 = 1-octene epoxidation using tert-butyl hydroperoxide (TBHP)**

In experiments 3.1.1-3.1.7, toluene (3 g, 0.03 mol as internal standard for GLC analysis), 1-octene (73 g, 0.6 mol) and a stirrer bar were place in a nitrogen-filled 250 ml three neck flask, equipped with a condenser, a thermometer probe and a septum. The mixture was warmed to 80 °C and TBHP (30 mmol, 3 M solution in iso-octane) was added via a syringe, followed by a solution of the titanasilsesquioxane (equivalent to 0.2 mmol) dissolved in octane (10 ml), or preceded by the heterogeneous catalyst in solid form.

In experiments 3.1.9-3.1.10 the same set-up was used, the catalyst being respectively Comparative Catalyst A and Comparative Catalyst B. The amount of Comp. cat. B used in experiment 3.1.10 was 0.2 mmol.

Experiment 3.1.8, using the silica supported titanasilsesquioxane catalyst 2.8, differed in that the amount of 1-octene reactant was 18.25 g (0.15 mol) and 100 ml of acetonitrile was added as a separate solvent.

Immediately at the start of the reaction, and at regular intervals thereafter, a sample was taken for analysis by Gas Liquid Chromatography (GLC) and iodometric titration.

GLC analyses were performed on a Hewlett-Packard HP 5890 instrument, with flame ionization detection (FID), a 25 m x 0.32 mm (0.52 m film thickness) HP-1 (cross-linked methyl silicone gum) fused silica capillary column, and helium as carrier gas. TBHP was determined by iodometric titration with sodium thiosulphate.

The results are presented in the following Table 1.

Table 1

| Epoxidation of 1-octene with TBHP | | | | | |
|---|---|---|---|---|---|
| Exp. | Catalyst | $k_2$ ($M^{-1}s^{-1}$) | Reaction Time (min.) | Conversion of TBHP (%) | Selectivity to epoxide (%) |
| 3.1.1 | 2.1 | 1.360 | 0 | 0 | - |
| | | | 5 | 49 | 92 |
| | | | 10 | 78 | 94 |
| | | | 15 | 87 | 91 |
| | | | 20 | 93 | 94 |
| | | | 30 | 100 | 90 |
| | | | 60 | 100 | 97 |

Table 1 (continued)

| Epoxidation of 1-octene with TBHP | | | | | |
|---|---|---|---|---|---|
| Exp. | Catalyst | $k_2$ ($M^{-1}s^{-1}$) | Reaction Time (min.) | Conversion of TBHP (%) | Selectivity to epoxide (%) |
| 3.1.2 | 2.2 | 1.360 | 0 | 0 | - |
| | | | 5 | 52 | 89 |
| | | | 10 | 75 | 90 |
| | | | 15 | 86 | 90 |
| | | | 20 | 92 | 90 |
| | | | 30 | 97 | 90 |
| | | | 60 | 100 | 90 |
| 3.1.3 | 2.3 | 1.980 | 0 | 0 | - |
| | | | 5 | 64 | 86 |
| | | | 10 | 87 | 87 |
| | | | 15 | 94 | 87 |
| | | | 20 | 98 | 88 |
| | | | 30 | 100 | 87 |
| | | | 60 | 100 | 88 |
| 3.1.4 | 2.4 | 2.740 | 0 | 0 | - |
| | | | 5 | 77 | 86 |
| | | | 10 | 93 | 86 |
| | | | 15 | 100 | 84 |
| | | | 20 | 100 | 86 |
| | | | 30 | 100 | 87 |
| | | | 60 | 100 | 86 |
| 3.1.5 | 2.5 | 1.420 | 0 | 0 | - |
| | | | 5 | 48 | 89 |
| | | | 10 | 75 | 88 |
| | | | 15 | 88 | 87 |
| | | | 20 | 83 | 91 |
| | | | 30 | 98 | 90 |
| | | | 60 | 100 | 89 |
| 3.1.6 | 2.6 | 1.130 | 0 | 0 | - |
| | | | 5 | 36 | 100 |
| | | | 10 | 61 | 99 |
| | | | 15 | 77 | 94 |
| | | | 20 | 86 | 94 |
| | | | 30 | 94 | 96 |
| | | | 60 | 100 | 94 |

Table 1 (continued)

| Epoxidation of 1-octene with TBHP | | | | | |
|---|---|---|---|---|---|
| Exp. | Catalyst | $k_2$ ($M^{-1}s^{-1}$) | Reaction Time (min.) | Conversion of TBHP (%) | Selectivity to epoxide (%) |
| 3.1.7 | 2.7 | 0.940 | 0 | 0 | - |
| | | | 5 | 37 | 94 |
| | | | 10 | 62 | 95 |
| | | | 15 | 75 | 95 |
| | | | 20 | 84 | 96 |
| | | | 30 | 93 | 95 |
| | | | 60 | 100 | 94 |
| 3.1.8 | 2.8 | 0.264 | 0 | 0 | - |
| | | | 10 | 22 | 86 |
| | | | 20 | 33 | 89 |
| | | | 35 | 39 | 95 |
| | | | 60 | 58 | 89 |
| 3.1.9 | Comp. A | 0.183 | 0 | 0 | - |
| | | | 15 | 19 | 96 |
| | | | 30 | 36 | 82 |
| | | | 60 | 57 | 98 |
| 3.1.10 | Comp. B | 0.310 | 0 | 0 | - |
| | | | 10 | 4 | 65 |
| | | | 15 | 11 | 87 |
| | | | 20 | 22 | 84 |
| | | | 30 | 44 | 88 |
| | | | 45 | 66 | 91 |
| | | | 60 | 79 | 92 |

**3.2 = propene epoxidation using tert-butyl hydroperoxide (TBHP)**

A nitrogen-filled 500 ml stainless steel autoclave was charged with toluene (100 ml), TBHP (50 mmol, 3 M solution in iso-octane), propene (16 g, 0.38 mol) and nonane (3 ml, 17 mmol as internal standard for GLC analysis). The autoclave was sealed and the temperature raised to 80 °C. The reaction was started by injecting the catalyst solution (0.1 mmol catalyst dissolved in 12 ml toluene) into the autoclave. Immediately at the start of the reaction, and at regular intervals thereafter, a sample was taken for analysis (GLC and iodometric titration), which was performed as described in 3.1.

The results are presented in the following Table 2.

Table 2

| Epoxidation of propene with TBHP | | | | | |
|---|---|---|---|---|---|
| Exp. | Catalyst | $k_2$ ($M^{-1}s^{-1}$) | Reaction Time (min.) | Conversion of TBHP (%) | Selectivity to epoxide (%) |
| 3.2.1 | Comp. A | 0.118 | 0 | 0 | - |
| | | | 13 | 7 | 45 |
| | | | 23 | 12 | 50 |
| | | | 43 | 19 | 55 |
| | | | 73 | 30 | 62 |
| 3.2.2 | 2.2 | 0.248 | 0 | 0 | - |
| | | | 10 | 10 | 91 |
| | | | 30 | 27 | 84 |
| | | | 60 | 49 | 83 |
| 3.2.3 | 2.3 | 0.408 | 0 | 0 | - |
| | | | 10 | 20 | 77 |
| | | | 30 | 46 | 70 |
| | | | 60 | 66 | 73 |

**Claims**

1. A process for the preparation of an oxirane compound by reacting an olefinically unsaturated hydrocarbon with an organic hydroperoxide, in the presence of a catalyst comprising a titanasilsesquioxane of the general formula $TiLR_7Si_7O_{12}$ and the structural formula

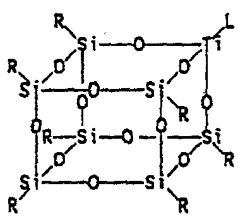

wherein R is chosen from the group of cyclopentyl, cyclohexyl and cycloheptyl and L is chosen from the group of alkyl, cycloalkyl, arylalkyl, alkoxy, aryloxy, siloxy, amido and OH.

2. Process according to claim 1, **characterized in that** L is chosen from the group of phenoxy, isopropoxy, benzyl, trimethylsiloxy and dimethyl amido.

3. Process according to claim 1 or 2, **characterized in that** the titanasilsesquioxane is supported on an inert carrier material having a specific surface area of at least 10 $m^2$ per gram and a pore volume of at least 0.1 ml per gram.

4. Process according to claim 3, **characterized in that** the inert carrier material is chosen from the group of silylated silica, silicon carbide and activated coal.

5. Process according to claim 1 or 2, **characterized in that** it is performed in a homogeneous reaction system and the amount of titanasilsesquioxane used is in the range of from $10^{-3}$ to $10^{-5}$ mol of titanium (calculated as the oxide) per mol of the organic hydroperoxide to be reacted.

6. Process according to any one of claims 1 to 5, **characterized in that** the olefinically unsaturated hydrocarbon is

selected from the group of propylene, butylene, isobutylene, butadiene, hexene-3, octene-1 and decene-1.

7. Process according to any one of claims 1 to 6, **characterized in that** the organic hydroperoxide is selected from the group of ethylbenzene hydroperoxide, cumene hydroperoxide and tertiary butyl hydroperoxide.

8. Process according to any one of claims 1 to 7, **characterized in that** the reaction is performed in the liquid phase, at a temperature in the range of from 0 to 200 °C and at a pressure of from 100 to 10000 kPa.

## Patentansprüche

1. Verfahren zur Herstellung einer Oxiranverbindung durch Umsetzen eines olefinisch ungesättigten Kohlenwasserstoffes mit einem organischen Hydroperoxid in Anwesenheit eines Katalysators, der ein Titansilsesquioxan mit der allgemeinen Formel $TiLR_7Si_7O_{12}$ und mit der Strukturformel

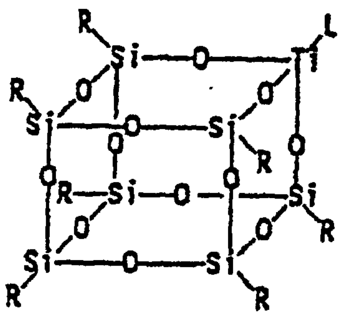

umfaßt, worin R aus der Gruppe Cyclopentyl, Cyclohexyl und Cycloheptyl ausgewählt ist und L aus der Gruppe Alkyl, Cycloalkyl, Arylalkyl, Alkoxy, Aryloxy, Siloxy, Amido und OH ausgewählt ist.

2. Verfahren nach Anspruch 1, **dadurch gekennzeichnet, daß** L aus der Gruppe Phenoxy, Isopropoxy, Benzyl, Trimethylsiloxy und Dimethylamido ausgewählt ist.

3. Verfahren nach Anspruch 1 oder 2, **dadurch gekennzeichnet, daß** das Titansilsesquioxan auf ein inertes Trägermaterial mit einer spezifischen Oberfläche von wenigstens 10 $m^2$/g und einem Porenvolumen von wenigstens 0,1 ml/g aufgebracht ist.

4. Verfahren nach Anspruch 3, **dadurch gekennzeichnet, daß** das inerte Trägermaterial aus der Gruppe silyliertes Siliciumdioxid, Siliciumcarbid und Aktivkohle ausgewählt ist.

5. Verfahren nach Anspruch 1 oder 2, **dadurch gekennzeichnet, daß** es in einem homogenen Reaktionssystem ausgeführt wird und daß die Menge an eingesetztem Titansilsesquioxan im Bereich von $10^{-3}$ bis $10^{-5}$ Mol Titan (berechnet als Oxid) pro Mol umzusetzendem organischem Hydroperoxid liegt.

6. Verfahren nach einem der Ansprüche 1 bis 5, **dadurch gekennzeichnet, daß** der olefinisch ungesättigte Kohlenwasserstoff aus der Gruppe Propylen, Butylen, Isobutylen, Butadien, Hexen-3, Octen-1 und Decen-1 ausgewählt wird.

7. Verfahren nach einem der Ansprüche 1 bis 6, **dadurch gekennzeichnet, daß** das organische Hydroperoxid aus der Gruppe Ethylbenzolhydroperoxid, Cumolhydroperoxid und tert.-Butylhydroperoxid ausgewählt wird.

8. Verfahren nach einem der Ansprüche 1 bis 7, **dadurch gekennzeichnet, daß** die Umsetzung in flüssiger Phase bei einer Temperatur im Bereich von 0 bis 200°C und bei einem Druck von 100 bis 10.000 kPa vorgenommen wird.

## Revendications

1. Procédé de préparation d'un composé d'oxiranne par la réaction d'un hydrocarbure oléfiniquement insaturé avec un hydroperoxyde organique, en présence d'un catalyseur comprenant un titanasilsesquioxane de la formule générale $TiLR_7Si_7O_{12}$ et de la formule structurale :

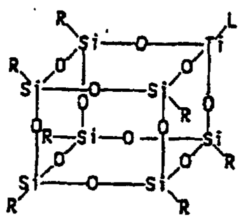

dans laquelle R est choisi dans le groupe comprenant les groupes cyclopentyle, cyclohexyle et cycloheptyle et L est choisi dans le groupe comprenant les groupes alkyle, cycloalkyle, arylalkyle, alcoxy, aryloxy, siloxy, amido et OH.

2. Procédé suivant la revendication 1, **caractérisé en ce que** L est choisi dans le groupe comprenant les groupes phénoxy, isopropoxy, benzyle, triméthylsiloxy et diméthyl amido.

3. Procédé suivant l'une ou l'autre des revendications 1 et 2, **caractérisé en ce que** le titanasilsesquioxane est fixé sur une matière de support inerte ayant une aire superficielle spécifique d'au moins 10 $m^2$ par gramme et un volume des pores d'au moins 0,1 ml par gramme.

4. Procédé suivant la revendication 3, **caractérisé en ce que** la matière de support inerte est choisie dans le groupe comprenant la silice silylée, le carbure de silicium et le charbon activé.

5. Procédé suivant l'une ou l'autre des revendications 1 et 2, **caractérisé en ce qu'**il est réalisé dans un système de réaction homogène et la quantité de titanasilsesquioxane utilisé se situe dans la gamme de $10^{-3}$ à $10^{-5}$ mole de titane (calculée comme oxyde) par mole de l'hydroperoxyde organique à faire réagir.

6. Procédé suivant l'une quelconque des revendications 1 à 5, **caractérisé en ce que** l'hydrocarbure oléfiniquement insaturé est choisi dans le groupe comprenant le propylène, le butylène, l'isobutylène, le butadiène, l'hexène-3, l'octène-1 et le décène-1.

7. Procédé suivant l'une quelconque des revendications 1 à 6, **caractérisé en ce que** l'hydroperoxyde organique est choisi dans le groupe comprenant l'hydroperoxyde d'éthylbenzène, l'hydroperoxyde de cumène et l'hydroperoxyde de butyle tertiaire.

8. Procédé suivant l'une quelconque des revendications 1 à 7, **caractérisé en ce que** la réaction est réalisée en phase liquide, à une température allant de 0 à 200°C et à une pression de 100 à 10.000 kPa.